# FASCICULE DE BREVET EUROPEEN

(11) **EP 1 970 561 B1**
(45) Date de publication et mention de la délivrance du brevet: **25.11.2009**
(21) Numéro de dépôt: 08356039.1
(22) Date de dépôt: 11.03.2008
(51) Int. Cl.: F03B 1/00, F03B 11/00

(54) **Installation hydraulique et procédé de commande d'une telle installation**
Hydraulische Anlage und Steuerverfahren einer solchen Anlage
Hydraulic installation and method of controlling such an installation

(30) Priorité: 12.03.2007 FR 0701762
(43) Date de publication de la demande: 17.09.2008
(73) Titulaire: ALSTOM Hydro France, 92300 Levallois Perret (FR)
(72) Inventeur: Bouvet, Yves Fernand, 38660 La Terrasse (FR); Paviller, Robert Joseph Emile, 38100 Grenoble (FR)
(74) Mandataire: Myon, Gérard Jean-Pierre

(56) Documents cités:
- EP-A- 0 878 624
- JP-A- 3 026 875
- JP-A- 4 366 747
- JP-A- 8 326 645

## Description

La présente invention a trait à une installation hydraulique qui comprend une machine de type turbine, pompe ou turbine-pompe dont la partie tournante est traversée par un écoulement d'eau forcé.

Avec ce genre d'installation, des phénomènes d'abrasion de certains composants de la machine hydraulique sont couramment observés, en particulier dans les installations alimentées à partir de cours d'eau chargés en sable et/ou de sédiments. Ces phénomènes d'abrasion peuvent entraîner une usure rapide de certains composants, notamment au bout de quelques centaines d'heures de fonctionnement dans des cas extrêmes. Il est alors nécessaire d'arrêter l'installation pour procéder à une opération de maintenance non programmée, ce qui engendre des pertes économiques importantes et ce, d'autant plus que l'arrêt d'exploitation peut survenir dans une période peu propice, par exemple lorsque l'on a besoin d'une quantité importante d'énergie électrique produite à partir de l'installation.

JP-A-03026875 divulgue un procédé de contrôle d'une turbine dans lequel un détecteur évalue la puissance de sortie d'une roue, alors qu'un dispositif d'admission détecte la puissance d'entrée. Ce procédé découle d'une approche globale de l'usure d'une machine qui ne permet pas d'évaluer l'usure de composants correspondant à des points critiques de la machine.

C'est à ces inconvénients qu'entend plus particulièrement remédier l'invention en proposant une nouvelle installation, qui permet d'optimiser les conditions d'exploitation de la ou des machines qu'elle contient, dans laquelle les opérations de maintenance peuvent être programmées en tenant compte de l'usure de la ou des machines et dont les régimes de fonctionnement peuvent tenir compte de phénomènes d'usure anticipés.

A cet effet, l'invention concerne une installation hydraulique qui comprend au moins une machine, de type turbine, pompe ou turbine-pompe, traversée par un écoulement d'eau forcé, ainsi qu'une unité de commande de cette machine. Cette installation est caractérisée en ce qu'elle comprend également
- au moins une éprouvette et/ou une buse représentative d'une partie d'un composant de la machine,
- des moyens d'amenée vers l'éprouvette et/ou vers la buse d'une portion de l'écoulement forcé,
- des moyens de mesure de l'usure par abrasion de l'éprouvette et/ou de la buse et
- au moins un dispositif d'évaluation d'usure comprenant l'éprouvette et/ou la buse, les moyens d'amenée de la portion d'écoulement et les moyens de mesure, ce dispositif étant apte à délivrer à l'unité de commande, pendant le fonctionnement de l'installation, un signal d'évaluation de l'usure par abrasion d'au moins un composant de la machine.

Grâce à l'invention, il est possible d'évaluer en temps réel et au sein de l'installation certains paramètres ayant une influence sur l'usure par abrasion d'un ou plusieurs composants critiques, tournants ou fixes de la machine pour en tenir compte lors de son exploitation. L'installation de l'invention permet de concentrer la mesure de l'usure par rapport à l'abrasion sur les éléments critiques ou essentiels de l'installation, tels la roue d'une turbine ou un distributeur. Ainsi, dans le cas où l'écoulement forcé est fortement chargé en sable ou en d'autres particules abrasives, il est possible de modifier les conditions de fonctionnement de l'installation sur le plan hydraulique afin de limiter l'usure des composants critiques. L'installation de l'invention permet également de tenir compte de l'usure cumulée des composants critiques de la machine, ce qui permet de programmer de façon optimisée les périodes d'arrêt de l'installation pour maintenance.

Selon des aspects avantageux mais non obligatoires de l'invention, une telle installation peut incorporer une ou plusieurs des caractéristiques suivantes :
- Les moyens d'amenée ci-dessus comprennent des moyens de réglage de la pression de la portion d'écoulement dirigée vers l'éprouvette.
- L'installation comprend plusieurs dispositifs d'évaluation d'usure renfermant chacun une éprouvette représentative d'une partie de composant de la machine et dont les moyens d'amenée d'eau à leurs éprouvettes respectives sont alimentés en parallèle, à partir d'une conduite où circule l'écoulement forcé, alors que des moyens indépendants de réglage de la pression de la portion d'écoulement sont prévus pour chaque dispositif.
- Le dispositif d'évaluation d'usure comprend au moins une cellule de mesure de la quantité et de la nature des particules abrasives, notamment des sédiments, apportées à un réservoir d'alimentation de la machine, cette cellule étant installée sur un cours d'eau se déversant dans ce réservoir.
- Le dispositif d'évaluation d'usure comprend au moins une cellule de mesure de la quantité et de la nature des particules abrasives, notamment des sédiments, traversant la machine, cette cellule étant alimentée en eau à partir d'une conduite amont d'amenée d'eau à la machine.
- L'unité de commande comprend des moyens de calcul, sur la base d'un signal d'évaluation délivré par le ou chaque dispositif de d'évaluation d'usure, de l'usure instantanée et/ou prévisionnelle d'au moins une partie de la machine, ainsi que des moyens de pilotage de la machine en fonction de l'usure prévisible calculée par les moyens de calcul.

L'invention concerne également un procédé de commande d'une installation telle que mentionnée ci-dessus et, plus spécifiquement, un procédé de commande qui comprend des étapes consistant à :
- a) amener, vers une éprouvette et/ou une buse représentative d'une partie d'un composant de la machine, une portion de l'écoulement forcé
- b) mesurer l'usure par abrasion de l'éprouvette et/ou de la buse
- c) délivrer, à une unité de commande de la machine et en cours de fonctionnement de l'installation un signal d'évaluation de l'usure par abrasion du composant
- d) évaluer l'usure par abrasion instantanée et/ou prévisionnelle d'un composant de la machine sur la base de signaux délivrés à l'unité de commande, et
- e) déterminer les régimes d'exploitation de l'installation, dont les phases d'arrêt pour maintenance, en tenant compte de l'évaluation d'usure effectuée à l'étape d).

Le procédé de l'invention permet donc d'optimiser les régimes de fonctionnement d'une installation hydraulique et d'éviter, dans une large mesure, les arrêts non programmés résultant de l'usure prématurée de la machine.

De façon avantageuse, le procédé comprend une étape f), antérieure à l'étape a) et dans laquelle au moins un dispositif d'évaluation d'usure est étalonné pour pouvoir délivrer à une unité de commande, qui détermine les régimes d'exploitation de l'installation, un signal d'évaluation représentatif de l'usure par abrasion de la partie tournante de la machine.
De façon également avantageuse, l'étape d) peut être effectuée
- en tenant compte d'au moins un signal émis par un dispositif d'évaluation d'usure comprenant au moins une cellule de mesure de la quantité et de la nature des particules abrasives, notamment des sédiments, apportées à un réservoir d'alimentation de la machine, la cellule étant installée sur un cours d'eau se déversant dans le réservoir ;
   et/ou
- en tenant compte d'au moins un signal émis par un dispositif d'évaluation d'usure comprenant au moins une cellule de mesure de la quantité et de la nature des particules abrasives, notamment des sédiments, traversant la machine, la cellule étant alimentée en eau à partir d'une conduite amont d'amenée d'eau à la machine.

L'invention sera mieux comprise et d'autres avantages de celle-ci apparaîtront à la lumière de la description qui va suivre d'un mode de réalisation d'une installation et d'un procédé conformes à son principe, donnée uniquement à titre d'exemple et faite en référence aux dessins annexés dans lesquels :
- la figure 1 est une représentation schématique de principe d'une installation conforme à l'invention et
- la figure 2 est une vue de détail de quatre dispositifs d'évaluation d'usure utilisés dans l'installation de la figure 1.

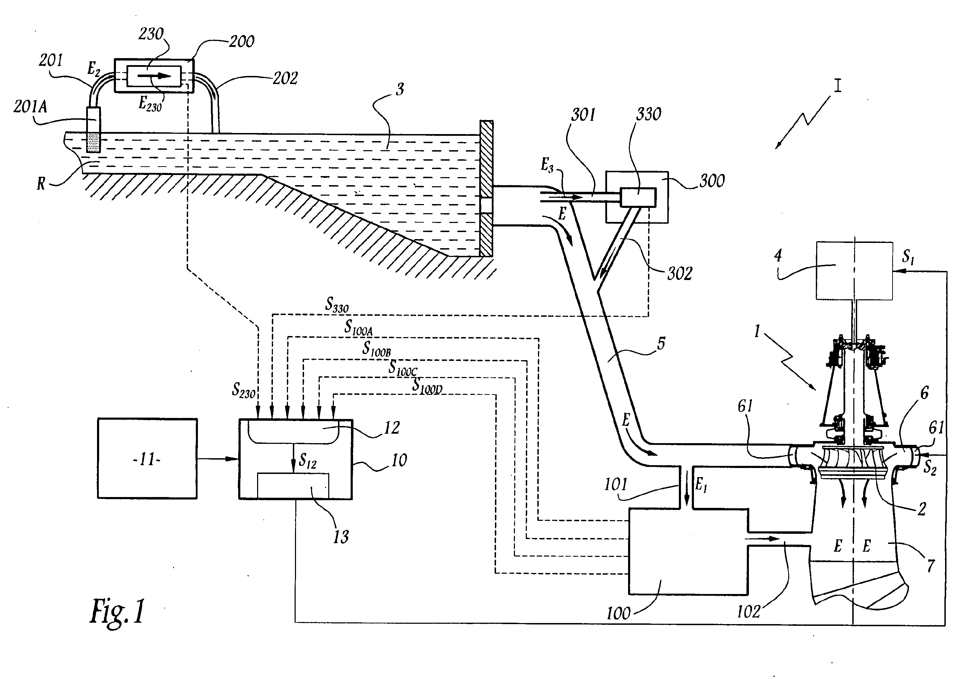

L'installation I représentée à la figure 1 comprend une turbine 1 de type Francis dont la roue 2 est destinée à être mise en rotation par un écoulement forcé E provenant d'une retenue d'eau 3 formée sur le lit d'une rivière R et constituant un réservoir d'alimentation de la turbine 1.

La turbine 1 est couplée à un alternateur 4 qui délivre un courant alternatif à un réseau non représenté en fonction de la rotation de la roue 2.

Une conduite 5 d'amenée de l'écoulement E à la roue 2 s'étend entre la retenue d'eau 3 et une bâche 6 équipée d'un distributeur 61 de régulation de l'écoulement E. Une conduite 7 est prévue pour évacuer l'écoulement E dans la rivière R, en aval de la retenue 3.

Une unité de commande 10 est prévue pour piloter la turbine 1 en fonction, notamment, des besoins en électricité du réseau alimenté à partir de l'alternateur 4. Pour ce faire, l'unité 10 est capable d'adresser à l'alternateur 4 et aux aubes directrices 61 des signaux de commande, respectivement S₁ et S₂.

L'unité 10 détermine les signaux S₁ et S₂ en fonction de données fournies par une mémoire 11 et relatives, par exemple, au nombre d'heures de fonctionnement de l'installation I depuis la dernière opération de maintenance effectuée, à l'état d'usure connu de la machine et aux critères de valorisation économique de la production d'énergie dans l'installation 1.

En fonction de la proportion de particules abrasives, notamment de sédiments, présentes dans l'écoulement E, les composants critiques de la turbine, tels que la roue 2 ou le distributeur 61, peuvent être plus ou moins usés, notamment au niveau de certaines portions particulièrement sollicitées. Pour éviter que l'usure par abrasion d'un composant induise un arrêt non anticipé de l'installation I, différents dispositifs d'évaluation de cette usure sont prévus.

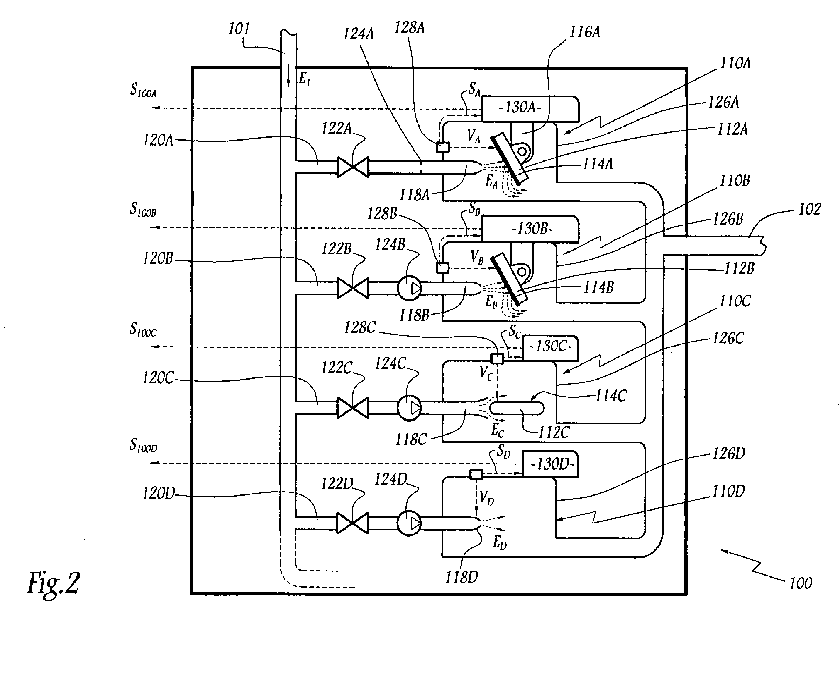

Un appareil 100 est destiné à être alimenté par une conduite 101 constituant une dérivation de la conduite 5. Cet appareil 100 est plus particulièrement visible à la figure 2. II comprend trois dispositifs 110A, 110B et 110C permettant de mesurer chacun l'usure d'une éprouvette 112A, 112B ou 112C, chaque éprouvette étant représentative d'une partie d'un composant de la turbine 1 susceptible d'être usée par l'écoulement E. Par exemple, les éprouvettes 112A et 112B peuvent être chacune représentatives d'une partie de la roue 2, alors que l'éprouvette 112C est représentative d'une partie du distributeur 61. Les éprouvettes 112A et 112B sont constituées dans des matériaux identiques ou similaires à ceux de la roue 2, alors que l'éprouvette 112C est constituée dans un matériau identique à celui du distributeur 61, ces matériaux étant ou non revêtus d'une couche de protection contre l'abrasion. Dans l'exemple représenté, des couches de protection contre l'abrasion sont visibles, avec les références 114A et 114B sur les éprouvettes 112A et 112B.

En variante, les matériaux des éprouvettes 112A, 112B et 112C peuvent être différents de ceux des parties de la turbine 1 qu'elles représentent, l'usure de ces matériaux étant étalonnée pour représenter celles des parties de la turbine 1.

L'éprouvette 112A est montée sur un support 116A en regard d'une buse 118A alimentée à partir de la portion E₁ de l'écoulement forcé E qui circule dans la conduite 101. Pour ce faire, un piquage 120A relie la conduite 101 à la buse 118A, une vanne de coupure 122A étant prévue sur ce piquage 120A, de même qu'une restriction 124A qui permet de générer une perte de charge en amont de la buse 118A. Ainsi, l'écoulement forcé d'eau E_{A} provenant de la buse 118A et dirigé vers la couche 114A de l'éprouvette 112A est à une pression plus faible que celle de l'écoulement E₁ et déterminée par la restriction 124A, tout en étant chargé en particules abrasives de la même façon que l'écoulement E_{A} puisque l'écoulement E_{A} constitue une portion de l'écoulement E.

Après avoir frappé la surface de la couche 114A, l'écoulement E_{A} est dirigé vers une conduite d'évacuation 102 qui rejoint la conduite 7. On note 126A l'enceinte du dispositif 110A dans laquelle sont disposés l'éprouvette 112A le support 116A et la buse 118A. L'écoulement E_{A} se produit dans cette enceinte. Une caméra 128A est montée sur une cloison de l'enceinte 126A et dirigée vers la couche 114A, ce que représente la flèche de visée V_{A}. La caméra 128A fournit, sous la forme d'un signal S_{A}, des images de la couche 114A à un module 130A apte à déterminer le degré d'usure de la couche 114A, c'est-à-dire le degré d'usure de l'éprouvette 112A. Le module 130A délivre ainsi à l'unité 10 un signal S_{100A} représentatif de l'usure de l'éprouvette 112A.

De la même façon, le dispositif 110B comprend une caméra 128B orientée vers la couche 114B, ce que représente la flèche V_{B}. La caméra 128B est connectée à un module 130B de traitement de son signal de sortie S_{B}. Le module 130B délivre à l'unité 10 un signal S_{100B} représentatif de l'usure de l'éprouvette 130B sous l'effet d'un écoulement E_{B} se produisant dans une enceinte 126B, en sortie d'une buse 118B alimentée par un piquage 120B à partir de la conduite 101. Une pompe 124B est disposée dans le piquage 120B, entre une vanne de coupure 122B et la buse 118A, ce qui permet d'augmenter la pression de l'écoulement E_{B} par rapport à celle de l'écoulement E₁ dans la conduite 101. Ainsi, l'écoulement E_{B} peut avoir une pression supérieure à l'écoulement E₁, afin d'être représentatif des conditions d'abrasion subies par la partie de la roue 2 que représente l'éprouvette 112B.

Par ailleurs, le dispositif 110C comprend une troisième caméra 128C montée sur une enceinte 126C et orientée vers une surface latérale 114C de l'éprouvette 112C, ce que représente la flèche de visée V_{C}. La caméra 128C fournit à un module 130C un signal S_{C} représentatif de l'usure de l'éprouvette 112C sous l'effet d'un écoulement E_{C} jaillissant d'un orifice 118C de sortie d'un piquage 120C à partir de la conduite 101. Le dispositif 110C permet de détecter plus particulièrement de l'usure par abrasion tangentielle d'une partie de la machine 1, la surface 114 C de l'éprouvette 112C étant destinée à être léchée par l'écoulement E_{C}. Ainsi, le module 130C peut fournir à l'unité 10 un signal S_{100C} représentatif de l'usure de l'éprouvette 112C.

Le piquage 120C est pourvu d'une vanne de coupure 122C et d'une pompe 124C permettant d'augmenter la pression de l'écoulement E_{C} par rapport à celle de l'écoulement E₁, comme dans le dispositif 110B.

L'appareil 100 comprend un quatrième dispositif 110D qui permet de mesurer l'usure d'une partie de la turbine 1. Le dispositif 110 comprend un piquage 120D qui relie la conduite 101 à une enceinte 126D. Le piquage 120D débouche dans l'enceinte 126D par une buse 118D à travers laquelle transite un écoulement E_{D} qui correspond à une partie de l'écoulement E₁. Le piquage 120D est équipé d'une vanne de coupure 122D et d'une pompe 124D qui permet d'augmenter la pression de l'écoulement E_{D} par rapport à celle de l'écoulement E₁, comme dans les dispositifs 110B et 110C.

Une caméra 128D est montée sur l'enceinte 126D et orientée vers la buse 118D, ce que représente la flèche de visée V_{D}. La caméra 128D fournit à un module 130D un signal S_{D} représentatif de l'usure de la buse 118D. Ainsi, le module 130D peut fournir à l'unité 10 un signal S_{100D} représentatif de l'usure de la buse 118D.

Selon une variante de l'invention qui n'est pas représentée, la mesure de l'usure d'une buse, comme dans le dispositif 110D, peut être effectuée dans un dispositif dans lequel on mesure également l'usure d'une éprouvette, comme l'un des dispositifs 110A et 110B. Dans ce cas, deux caméras sont utilisées, l'une dirigée vers l'éprouvette et l'autre vers la buse.

Selon une autre variante non représentée, plusieurs buses du type de la buse 118D peuvent être utilisées dans un dispositif 110D, leurs usures respectives étant contrôlées par une ou plusieurs caméras.

Dans les dispositifs 110C et 110D, une restriction peut être utilisée à la place des pompes 124C et 124D lorsqu'on souhaite abaisser la pression de l'écoulement E_{C} ou E_{D} par rapport à celle de l'écoulement E₁.

Dans les dispositifs 110A à 110D, les restrictions et/ou pompes 124A, 124B et équivalentes sont optionnelles.

II est à noter ici que, à la place des caméras 128A, 128B, 128C et 128D, on pourrait utiliser d'autres dispositifs de mesure d'usure des éprouvettes 112A, 112B et 112C et de la buse 118D, ces dispositifs pouvant être de type optique, massique ou autres.

Les écoulements E_{A}, E_{B}, E_{C} et E_{D} sont en permanence représentatifs de l'écoulement E car la conduite 101 dévie une partie E₁ de l'écoulement E prise dans une portion de la conduite 5 proche de la bâche 6.

Comme représenté en traits pointillés à la figure 2, l'appareil 100 peut comprendre plus de quatre dispositifs du type des dispositifs 110A, 110B, 110C et 110D, en fonction du nombre de composants de la machine 1 dont on veut évaluer l'usure par abrasion au moyen d'éprouvettes. En variante, l'appareil peut ne comprendre qu'un seul tel dispositif d'évaluation.

L'invention s'applique avec des éprouvettes représentant des parties de la turbine autres que la roue 2 et les directrices 61.

Selon une autre variante, les caméras 128A et équivalentes peuvent être reliées directement à l'unité 10 qui incorpore alors des modules similaires aux modules 130A et équivalents.

L'appareil 100 fonctionne après un étalonnage qui permet d'établir une corrélation, entre l'usure d'une éprouvette 112A ou équivalente ou de la buse 118D, et l'usure réelle d'un composant de la machine 1, notamment en fonction de la concentration et de la nature des particules abrasives transportées par l'écoulement E. Cet étalonnage peut être réalisé au cours d'une période de fonctionnement initial de l'installation l, ou à partir de résultats d'essais réalisés en laboratoire, sur une plateforme.

L'installation I comprend également un appareil 200 qui est installé à proximité ou dans la rivière R, en amont de la retenue d'eau 3. Cet appareil 200 prélève, dans le lit de la rivière R et au moyen d'une conduite 201 équipée d'une crépine 201A, un flux d'eau E₂ soumis à une cellule 230 avant d'être rejetée dans la rivière R ou dans la retenue 3 à travers une conduite d'évacuation 202. L'écoulement d'eau E₂₃₀ à l'intérieur de la cellule 230 permet à cette cellule de délivrer à l'unité 10 un signal S₂₃₀ représentatif de la teneur de l'eau de la rivière R en particules abrasives. L'écoulement E₂₃₀ représente tout ou partie du flux E₂. En connaissant la position de l'appareil 200 par rapport à la turbine 1 et le débit de l'écoulement forcé E, il est possible de déterminer à quel moment l'eau présentant la concentration en particules abrasives déterminée par la cellule 230 à un instant donné traversera la roue 2. Ainsi, l'unité 100 peut émettre les signaux de commande S₁ et S₂ en tenant compte de la teneur prévisionnelle de l'écoulement E en particules abrasives, ce qui permet d'optimiser les cycles de production, notamment en arrêtant la turbine 1 lorsque l'écoulement E est fortement chargé en particules abrasives.

Selon un aspect avantageux de l'invention qui n'est pas représenté, l'installation 1 peut comprendre plusieurs appareils 200 répartis sur plusieurs cours d'eau alimentant le réservoir 3. Dans ce cas, on tient compte de la distance de chacun des appareils 200 par rapport à la turbine 1 pour déterminer la teneur prévisionnelle de l'écoulement E en particules abrasives.

Selon un autre aspect de l'invention qui n'est pas représenté, un appareil 200 peut comprendre plusieurs cellules du type de la cellule 230, ce qui permet de réaliser plusieurs mesures en un point du réseau d'alimentation en eau de la turbine 1.

L'installation I comprend également un appareil 300 alimenté en eau par une conduite 301 prélevant une partie E₃ de l'écoulement E dans la conduite 5. L'eau fournie à l'appareil 300 est rejetée dans la conduite 5 par une conduite d'évacuation 302. L'appareil 300 comprend une cellule 330 permettant de déterminer la quantité et la nature des particules abrasives présentes dans la portion E₃₃₀ de l'écoulement E traversant la cellule 330, cette portion étant représentative de l'écoulement E puisque l'écoulement E₃ est puisée dans la conduite 5. La portion E₃₃₀ représente tout ou partie de l'écoulement E₃. La cellule 330 fournit à l'unité 10 un signal S₃₃₀ permettant d'évaluer l'usure prévisionnelle de la turbine 1 sur la base de la teneur en particules abrasives de l'écoulement E.

La corrélation entre l'apport en particules abrasives dans la rivière R, éventuellement en plusieurs points, et la quantité de ces particules traversant réellement la roue 2, de même que le déphasage dans le temps entre la mesure effectuée par la ou les cellules 230 et le passage effectif dans la conduite mesurée par la cellule 330 permet de contrôler l'efficacité des dispositifs de dessablage éventuellement prévus dans l'installation l, de piloter des opérations de chasse ou de maintenance de ces dispositifs et de déterminer avec précision dans le temps la quantité de particules abrasives qui va traverser la turbine 1. L'étalonnage de cette corrélation peut être effectué sur site ou sur la base d'un modèle réduit simulant l'installation I. En particulier, l'étalonnage de la cellule 330, peut avoir lieu sur la base de mesures de concentration et de nature des particules abrasives, mesures réalisées à l'aide d'un spectromètre, d'un turbidimètre par prélèvements ou à partir de résultats d'essais effectués en laboratoire sur une boucle permettant de quantifier l'usure en fonction de la nature et de la quantité des particules abrasives.

L'appareil 300 peut également, en variante, comprendre plusieurs cellules de mesure 330.

L'invention a été décrite dans le cas où les appareils 200 et 300 fonctionnent automatiquement. En variante, des mesures correspondantes peuvent être effectuées, manuellement et à intervalles prédéterminés, par un opérateur, le résultat de ces mesures étant fourni à l'unité 10 sous forme de signaux analogues aux signaux S₂₃₀ et/ou S₃₃₀ mentionnés ci-dessus.

Ainsi, en tenant compte des signaux S_{100A}, S_{100B}, S_{100C}, S₂₃₀ et S₃₃₀, un calculateur 12 appartenant à l'unité 10 peut fournir à un module de commande 13 appartenant également à l'unité 10 un signal S₁₂ d'évaluation globale de l'usure instantanée et prévisionnelle des composants de la turbine 1, l'information correspondante étant alors prise en compte par le module 13 pour piloter la turbine 1 au moyen des signaux S₁ et S₂.

Le signal S₁₂ correspond à l'usure instantanée des composants de la turbine 1 car il intègre les signaux S_{100A}, S_{100B} et S_{100C} qui sont représentatifs de l'usure instantanée de certains composants de la turbine 1. Le signal S₁₂ correspond également à l'usure prévisionnelle dans la mesure où il intègre les signaux S₂₃₀ et S₃₃₀ qui correspondent à une usure prévue.

L'invention a été décrite en référence à une installation qui comprend à la fois les appareils 100, 200 et 300. Elle est applicable à une installation ne comprenant que l'appareil 100 et un seul des appareils 200 et 300, voire aucun autre appareil, ou au contraire, plus de trois types de dispositifs d'évaluation d'usure.

L'invention a été décrite en faisant référence à une turbine 1 de type Francis. Elle est applicable à différents types de turbines, de haute chute ou de basse chute. L'invention est également applicable aux pompes et aux turbines-pompes. En particulier, dans le cas d'une turbine Pelton, un dispositif du type de dispositif 110D peut permettre d'évaluer l'usure d'un injecteur d'eau en direction des augets de la roue de turbine.

L'invention est applicable à une installation incorporant plusieurs machines hydrauliques dont les conditions de fonctionnement peuvent être pilotées par une unité adaptée.

## Revendications

1. Installation hydraulique comprenant au moins une machine (1), de type turbine, pompe ou turbine-pompe traversée par un écoulement d'eau forcé (E), et une unité (10) de commande de la machine, **caractérisée en ce qu'**elle comprend également :
- au moins une éprouvette (112A, 112B, 112C) et/ou une buse (118D) représentative d'une partie d'un composant (2, 61) de la machine (1),
- des moyens (118A-124A, 118B-124B, 118C-124C, 120D-124D) d'amenée vers l'éprouvette et/ou vers la buse d'une portion (E_{A}, E_{B}, E_{C}, E_{D}) de l'écoulement forcé (E),
- des moyens (128A-130A, 128B-130B, 128C-130C, 128D-130D) de mesure de l'usure par abrasion de l'éprouvette et/ou de la buse et
- au moins un dispositif (110A, 110B, 110C, 110D) d'évaluation d'usure comprenant l'éprouvette et/ou la buse, les moyens d'amenée de la portion d'écoulement et les moyens de mesure, ce dispositif étant apte à délivrer à l'unité de commande, pendant le fonctionnement de l'installation (I), un signal (S_{100A}, S_{100B}, S_{100C}, S_{100D}) d'évaluation de l'usure par abrasion d'au moins un composant (2, 61) de la machine (1).

2. Installation selon la revendication 1, **caractérisée en ce que** les moyens d'amenée comprennent des moyens (124A, 124B, 124C, 124D) de réglage de la pression de la portion d'écoulement (E_{A}, E_{B}, E_{C}, E_{D}) dirigée vers l'éprouvette (112A, 112B, 112C) ou vers la buse (118D).

3. Installation selon la revendication 2, **caractérisée en ce qu'**elle comprend plusieurs dispositifs d'évaluation d'usure (110A, 110B, 110C) renfermant chacun une éprouvette (112A, 112B, 112C), représentative d'une partie de composant (2, 61) de la machine (1) et dont les moyens (118A-124A, 118B-124B, 118C-124C) d'amenée d'eau à leurs éprouvettes respectives sont alimentés en parallèle à partir d'une conduite (5) où circule l'écoulement forcé (E), et **en ce que** des moyens indépendants (124A, 124B, 124C) de réglage de la pression de la portion d'écoulement (E_{A}, E_{B}, E_{C}) sont prévus pour chaque dispositif (110A, 110B, 110C).

4. Installation selon l'une des revendications précédentes, **caractérisée en ce qu'**elle comprend un dispositif d'évaluation d'usure supplémentaire (200) qui comprend au moins une cellule (230) de mesure de la quantité et de la nature des particules abrasives, notamment des sédiments, apportées à un réservoir (3) d'alimentation de la machine (1), la cellule étant installée sur un cours d'eau (R) se déversant dans le réservoir.

5. Installation selon l'une des revendications précédentes, **caractérisée en ce qu'**elle comprend un dispositif d'évaluation d'usure supplémentaire (300) qui comprend au moins une cellule (330) de mesure de la quantité et de la nature des particules abrasives, notamment des sédiments, traversant la machine (1), la cellule étant alimentée (E₃) en eau à partir d'une conduite amont (5) d'amenée d'eau à la machine (1).

6. Installation selon l'une des revendications précédentes, **caractérisée en ce que** l'unité de commande (10) comprend :
- des moyens (12) de calcul, sur la base d'un signal d'évaluation (S_{100A}, S_{100B}, S_{100C}, S_{100D}, S₂₃₀, S₃₃₀) délivré par le ou chaque dispositif d'évaluation d'usure (110A, 110B, 110C, 200, 300), de l'usure instantanée et/ou prévisionnelle d'au moins une partie (2, 61) de la machine (1), et
- des moyens (13) de pilotage (S₁, S₂) de la machine en fonction de l'usure prévisible calculée (S₁₂) par les moyens de calcul.

7. Procédé de commande d'une installation hydraulique comprenant une machine (1) de type turbine, pompe ou turbine-pompe traversée par un écoulement forcé (E), **caractérisé en ce qu'**il comprend des étapes consistant à :
- a) amener, vers une éprouvette (112A, 112B, 112C) et/ou une buse (118D) représentative d'une partie d'un composant (2, 6) de la machine (1), une portion (E_{A}, E_{B}, E_{C}, E_{D}) de l'écoulement forcé (E)
- b) mesurer (V_{A}, V_{b}, V_{c}, V_{D}) l'usure par abrasion de l'éprouvette et/ou de la buse
- c) délivrer, à une unité (10) de commande de la machine (1) et en cours de fonctionnement de l'installation (I) un signal (S_{100A}, S_{100B}, S_{100C}, S_{100D}) d'évaluation de l'usure par abrasion du composant (2, 61)
- d) évaluer (S₁₂) l'usure par abrasion instantanée et/ou prévisionnelle d'un composant (2) de la machine sur la base de signaux (S_{100A}, S_{100B}, S_{100C}, S_{100D}) délivrés à l'unité de commande, et
- e) déterminer les régimes d'exploitation (S₁, S₂) de l'installation (I), dont les phases d'arrêt pour maintenance, en tenant compte de l'évaluation d'usure effectuée à l'étape d).

8. Procédé selon la revendication 7, **caractérisé en ce qu'**il comprend une étape f), antérieure à l'étape a) et dans laquelle au moins un dispositif d'évaluation d'usure (110A, 110B, 110C, 110D) est étalonné pour pouvoir délivrer à une unité de commande (10), qui détermine les régimes d'exploitation de l'installation, un signal d'évaluation (S_{100A}, S_{100B}, S_{100C}) représentatif de l'usure par abrasion de la partie tournante (2).

9. Procédé selon l'une des revendications 7 ou 8, **caractérisé en ce que** l'étape d) est effectuée en tenant compte d'au moins un signal (S₂₃₀) émis par un dispositif d'évaluation d'usure (200) comprenant au moins une cellule (230) de mesure de la quantité et de la nature des particules abrasives, notamment des sédiments, apportées à un réservoir (3) d'alimentation de la machine (1), la cellule étant installée sur un cours d'eau (R) se déversant dans le réservoir.

10. Procédé selon l'une des revendications 7 à 9, **caractérisé en ce que** l'étape d) est effectuée en tenant compte d'au moins un signal (S₃₀₀) émis par un dispositif d'évaluation d'usure (300) comprenant au moins une cellule (330) de mesure de la quantité et de la nature des particules abrasives, notamment des sédiments, traversant la machine, la cellule étant alimentée (E₃) en eau à partir d'une conduite amont (5) d'amenée d'eau à la machine.

## Claims

1. Hydraulic installation comprising at least one machine (1) of the turbine, pump or turbine-pump type, through which a forced water flow (E) passes, and a unit (10) for controlling the machine, **characterised in that** said installation also comprises:
- at least one test sample (112A, 112B, 112C) and/or a nozzle (118D), which represent a portion of a component (2, 61) of the machine (1),
- means (118A-124A, 118B-124B, 118C-124C, 120D-124D) for conveying a portion (E_{A}, E_{B}, E_{C}, E_{D}) of the forced flow (E) towards the test sample and/or towards the nozzle,
- means (128A-130A, 128B-130B, 128C-130C, 128D-130D) for measuring the wear by abrasion of the test sample and/or of the nozzle and
- at least one device (110A, 110B, 110C, 110D) for evaluating wear comprising the test sample and/or the nozzle, the means for conveying the portion of the flow and the measuring means, said device being capable of supplying a signal (S_{100A}, S_{100B}, S_{100C}, S_{100D}) for evaluating the wear by abrasion of at least one component (2, 61) of the machine (1) to the control unit, during operation of the installation (I).

2. Installation according to claim 1, **characterised in that** the conveying means comprise means (124A, 124B, 124C, 124D) for adjusting the pressure of the portion of the flow (E_{A}, E_{B}, E_{C}, E_{D}) directed towards the test sample (112A, 112B, 112C) or towards the nozzle (118D).

3. Installation according to claim 2, **characterised in that** it comprises a plurality of devices for evaluating wear (110A, 110B, 110C) which each enclose a test sample (112A, 112B, 112C), which represents a portion of the component (2, 61) of the machine (1), and the means (118A-124A, 118B-124B, 118C-124C) of said evaluation devices for conveying water to their respective test samples are supplied in parallel from a pipe (5) in which the forced flow (E) circulates, and **in that** separate means (124A, 124B, 124C) for regulating the pressure of the portion of the flow (E_{A}, E_{B}, E_{C}) are provided for each device (110A, 110B, 110C).

4. Installation according to any one of the preceding claims, **characterised in that** it comprises an additional device (200) for evaluating wear which comprises at least one unit (230) for measuring the quantity and type of abrasive particles, sediment in particular, carried to a reservoir (3) for supplying the machine (1), the unit being installed on a water course (R) flowing into the reservoir.

5. Installation according to any one of the preceding claims, **characterised in that** it comprises an additional device (300) for evaluating wear which comprises at least one unit (330) for measuring the quantity and type of abrasive particles, sediment in particular, passing through the machine (1), the unit being supplied (E₃) with water from an upstream pipe (5) for conveying water to the machine (1).

6. Installation according to any one of the preceding claims, **characterised in that** the control unit (10) comprises:
- means (12) for calculating the instantaneous wear and/or predicted wear of at least one part (2, 61) of the machine (1) based on an evaluation signal (S_{100A}, S_{100B}, S_{100D}, S₂₃₀, S₃₃₀) supplied by the or each device (110A, 110B, 110C, 200, 300) for evaluating wear, and
- means (13) for controlling (S₁, S₂) the machine as a function of the predicted wear calculated (S₁₂) by the calculating means.

7. Method for controlling a hydraulic installation comprising a machine (1) of the turbine, pump or turbine-pump type, through which a forced flow (E) passes, **characterised in that** it comprises the steps of:
- a) conveying a portion (E_{A}, E_{B}, E_{C}, E_{D}) of the forced flow (E) towards a test sample (112A, 112B, 112C) and/or a nozzle (118D) which represents a portion of a component (2, 6) of the machine (1),
- b) measuring (V_{A}, V_{B}, V_{C}, V_{D}) the wear by abrasion of the test sample and/or the nozzle,
c) supplying a signal (S_{100A}, S_{100B}, S_{100C}, S_{100D}) for evaluating the wear by abrasion of the component (2, 61) to a unit (10) for controlling the machine (1) during operation of the installation (I),
- d) evaluating (S₁₂) the instantaneous and/or predicted wear by abrasion of a component (2) of the machine on the basis of signals (S_{100A}, S_{100B}, S_{100C}, S_{100D}) supplied to the control unit, and
- e) determining the operating speeds (S₁, S₂) of the installation (I), including the shutdown phases for maintenance, by taking into consideration the evaluation of wear carried out in step d).

8. Method according to claim 7, **characterised in that** it comprises a step f), prior to step a) in which at least one device (110A, 110B, 110C, 110D) for evaluating wear is calibrated to be able to supply an evaluation signal (S_{100A}, S_{100B}, S_{100C}), which represents the wear by abrasion of the rotating part (2), to a control unit (10) which determines the operating speeds of the installation.

9. Method according to either claim 7 or claim 8, **characterised in that** step d) is carried out by taking into consideration at least one signal (S₂₃₀) emitted by a device (200) for evaluating wear comprising at least one unit (230) for measuring the quantity and type of abrasive particles, sediment in particular, carried to a reservoir (3) for supplying the machine (1), the unit being installed on a water course (R) flowing into the reservoir.

10. Method according to any one of claims 7 to 9, **characterised in that** step d) is carried out by taking into consideration at least one signal (S₃₀₀) emitted by a device (300) for evaluating wear comprising at least one unit (330) for measuring the quantity and type of abrasive particles, sediment in particular, passing through the machine, the unit being supplied (E₃) with water from an upstream conduit (5) for conveying water to the machine.

## Patentansprüche

1. Hydraulische Anlage, die mindestens eine Maschine (1) der Art einer Turbine, Pumpe oder Turbinenpumpe, die von einem Druckwasserstrom (E)durchströmt ist, sowie eine Steuereinheit (10) dieser Maschine umfasst, **dadurch gekennzeichnet, dass** sie weiters umfasst:
- mindestens einen Probekörper (112A, 112B, 112C) und/oder eine Düse (118D), die repräsentativ für einen Teil einer Komponente (2, 61) der Maschine (1) ist bzw. sind,
- Mittel (118A-124A, 118B-124B, 118C-124C, 120D-124D), um einen Teil (E_{A}, E_{B}, E_{C}, E_{D}) des Druckstroms (E) gegen den Probekörper und/oder die Düse zu lenken,
- Mittel (128A-130A, 128B-130B, 128C-130C, 128D-130D) zum Messen der Abnutzung durch Abrasion des Probekörpers und/oder der Düse und
- mindestens eine Vorrichtung (110A, 110B, 110C, 110D) zum Auswerten der Abnutzung, umfassend den Probekörper und/oder die Düse, die Mittel, um den Teil des Stroms zu lenken, und die Mittel zum Messen, wobei diese Vorrichtung dazu geeignet ist, an die Steuereinheit während des Betriebs der Anlage (I) ein Signal (S_{100A}, S_{100B}, S₁₀₀, S_{100D}) zum Auswerten der Abnutzung durch Abrasion von mindestens einer Komponente (2, 61) der Maschine (1) zu liefern.

2. Hydraulische Anlage nach Anspruch 1, **dadurch gekennzeichnet, dass** die Mittel zum Lenken Mittel (124A, 124B, 124C, 124D) zum Einstellen des Drucks des auf den Probekörper (112A, 112B, 112C) und/oder die Düse (118D) gerichteten Teilstroms (E_{A}, E_{B}, E_{C}, E_{D}) umfassen.

3. Hydraulische Anlage nach Anspruch 2, **dadurch gekennzeichnet, dass** sie mehrere Vorrichtungen zur Auswertung der Abnutzung (110A, 110B, 110C) umfasst, wobei jede einen Probekörper (112A, 112B, 112C) enthält, von denen jeder für einen Teil der Komponente (2, 61) der Maschine (1) repräsentativ ist, und deren Mittel (118A-124A, 118B-124B, 118C-124C) zur Lenkung des Wassers an ihre jeweiligen Probekörper parallel geschaltet sind, ausgehend von einer Leitung (5), wo der Druckstrom (E) fließt, **und dadurch, dass** unabhängige Mittel (124A, 124B, 124C) zur Einstellung des Drucks des Teilstroms (E_{A}, E_{B}, E_{C}) für jede Vorrichtung (110A, 110B, 110C) vorgesehen sind.

4. Anlage nach einem der vorstehenden Ansprüche, **dadurch gekennzeichnet, dass** sie eine weitere Vorrichtung (200) zur Bestimmung der Abnutzung umfasst, die mindestens eine Messzelle (230) für die Menge und die Art der abrasiven Teilchen, insbesondere der Sedimente, die in einen Versorgungsspeicher (3) der Maschine (1) eingebracht werden, umfasst, wobei diese Zelle in einem Wasserlauf (R), der sich in diesen Speicher ergießt, installiert ist.

5. Anlage nach einem der vorstehenden Ansprüche, **dadurch gekennzeichnet, dass** sie eine weitere Vorrichtung (300) zur Bestimmung der Abnutzung umfasst, die mindestens eine Messzelle (330) für die Menge und die Art der abrasiven Teilchen, insbesondere der Sedimente, die die Maschine (1) durchströmen, umfasst, wobei diese Zelle mit Wasser (E₃) versorgt wird, das von einer Leitung (5) stromaufwärts der Wasserversorgung der Maschine (1) stammt.

6. Anlage nach einem der vorstehenden Ansprüche, **dadurch gekennzeichnet, dass** die Steuerungseinheit (10) umfasst:
- Mittel (12) zum Berechnen der momentanen und/oder prognostizierten Abnutzung von mindestens einem Teil (2, 61) der Maschine (1) auf der Basis eines Auswertungssignals (S_{100A}, S_{100B}, S_{100C}, S_{100D}, S₂₃₀, S₃₃₀) , das durch die oder jede Auswertungsvorrichtung der Abnutzung (110A, 110B, 110C, 200, 300) geliefert wird, sowie
- Mittel (13) der Steuerung (S₁, S₂) der Maschine je nach der von den Mitteln zum Berechnen berechneten prognostizierten Abnutzung (S₁₂) -

7. Verfahren zum Steuern einer hydraulischen Anlage, die mindestens eine Maschine (1) der Art einer Turbine, Pumpe oder Turbinenpumpe, die von einem Druckwasserstrom (E)durchströmt ist, umfasst, **dadurch gekennzeichnet, dass** es Schritte umfasst, die konsistent sind mit:
- a) Lenken eines Teils (E_{A}, E_{B}, E_{C}, E_{D}) des Druckstroms (E) zu einem Probekörper (112A, 112B, 112C) und/oder einer Düse (118D), repräsentativ für einen Teil einer Komponente (2, 6) der Maschine (1),
- b) Messung (V_{A}, V_{B}, V_{C}, V_{D}) der Abnutzung durch Abrasion des Probekörpers und/oder der Düse
- c) Liefern eines Auswertesignals (S_{100A}, S_{100B}, S_{100C}, S_{100D}) der Abnutzung durch Abrasion der Komponente (2, 61) an eine Einheit (10) der Steuerung der Maschine (1) und in weiterer Folge des Betriebs der Anlage (I)
- d) Ermittlung (S₁₂) der unmittelbaren und/oder prognostizierten Abnutzung durch Abrasion von einer Komponente (2) der Maschine auf der Basis der an die Steuerungseinheit gelieferten Signale (S_{100A}, S_{100B}, S_{100C}, S_{100D}), und
- e) Bestimmung der Betriebsweisen (kann auch heißen: Betriebszeiten, A.d.Ü.) (S₁, S₂) der Anlage (I), deren Stillstandszeiten für Wartung, unter Berücksichtigung der in Schritt d) durchgeführten Ermittlung der Abnutzung.

8. Verfahren nach Anspruch 7, **dadurch gekennzeichnet, dass** es einen Schritt f) vor dem Schritt a) umfasst, bei dem zumindest eine Vorrichtung zum Bestimmen der Abnutzung (110A, 110B, 110c, 110D) kalibriert wird, damit sie ein Auswertungssignal (S_{100A}, S_{100B}, S_{100C}), das repräsentativ für die Abnutzung durch Abrasion des sich drehenden Teils (2) ist, an eine Steuereinheit (10), die die Betriebsweisen (kann auch heißen: Betriebszeiten, A.d.Ü.) der Anlage bestimmt, liefern kann.

9. Verfahren nach einem der Ansprüche 7 oder 8, **dadurch gekennzeichnet, dass** Schritt d) durchgeführt wird, indem man mindestens ein von einer Vorrichtung zur Bestimmung der Abnutzung (200) ausgesandtes Signal (S₂₃₀) berücksichtigt, die mindestens eine Messzelle (230) für die Menge und die Art der abrasiven Partikel, die in einen Speicher (3) zur Versorgung der Maschine (1) eingebracht werden, insbesondere der Sedimente, umfasst, wobei die Zelle in einem Wasserlauf (R), der sich in den Speicher ergießt, installiert ist.

10. Verfahren nach einem der Ansprüche 7 bis 9, **dadurch gekennzeichnet, dass** der Schritt d) durchgeführt wird, indem man mindestens ein von einer Vorrichtung zur Bestimmung der Abnutzung (300) ausgesandtes Signal (S₃₀₀) berücksichtigt, die mindestens eine Messzelle (330) für die Menge und für die Art der abrasiven Partikel, die die Maschine durchströmen, insbesondere der Sedimente, umfasst, wobei die Zelle mit Wasser versorgt (E₃) wird, das von einer Leitung stromaufwärts (5) des Zulaufs des Wassers zur Maschine stammt.
